Europäisches Patentamt

(19) European Patent Office

Office européen des brevets

(11) Numéro de publication : **0 110 782**
**B1**

(12) ## FASCICULE DE BREVET EUROPÉEN

(45) Date de publication du fascicule du brevet :
27.05.87

(51) Int. Cl.⁴ : **G 01 F 1/06**

(21) Numéro de dépôt : **83402268.3**

(22) Date de dépôt : **24.11.83**

(54) **Dispositif de mesure du débit d'un fluide.**

(30) Priorité : **26.11.82 FR 8219839**

(43) Date de publication de la demande :
**13.06.84 Bulletin 84/24**

(45) Mention de la délivrance du brevet :
**27.05.87 Bulletin 87/22**

(84) Etats contractants désignés :
**AT BE CH DE FR GB IT LI LU NL SE**

(56) Documents cités :
**BE-A- 433 573**
**DE-C- 1 076**
**DE-C- 18 975**
**DE-C- 806 735**
**FR-A- 808 422**
**JOURNAL OF PHYSICS E. SCIENTIFIC INSTRU-**
**MENTS, vol. 12, no. 6, juin 1979, pages 553-556, The**
**Institute of Physics, Londres, GB R.E. WHELAN: "A**
**miniature low-flow-rate turbine flowmeter for high**
**pressure"**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur : **Petit, Roland**
**9, allée René de Bruxeuil Résidence Foch**
**F-28100 Dreux (FR)**

(74) Mandataire : **Jacobson, Claude et al**
**L'AIR LIQUIDE, SOCIETE ANONYME POUR L'ETUDE ET L'EXPLOITATION DES PROCEDES GEORGES CLAUDE 75, quai d'Orsay**
**F-75321 Paris Cedex 07 (FR)**

Jouve, 18, rue St-Denis, 75001 Paris. France

## Description

L'invention concerne un dispositif de mesure du débit d'un fluide du type comprenant un carter étanche qui définit d'une part une chambre médiane dans laquelle une roue à aubages radiaux équidistants est montée librement rotative autour de son axe, en position excentrée par rapport à cette chambre, et d'autre part deux chambres latérales situées de part et d'autre de la roue, ledit carter étant muni d'un ajutage d'amenée et d'un ajutage d'évacuation de fluide, lesdits ajutages étant alignés et disposés tangentiellement à la roue de façon que le flux de fluide issu de l'ajutage d'amenée rencontre les aubages perpendiculairement audit axe de rotation. Le brevet BE-A-433 573 montre un dispositif de ce type.

Les fabricants de dispositifs de mesure de débit de fluide, en particulier de débit de gaz, offrent sur le marché une gamme de matériel qui permet à l'heure actuelle de compter avec précision les débits les plus élevés, mais dont la limite inférieure se situe vers 1 m³/h brut ou réel (c'est-à-dire 1 m³/h dans les conditions réelles de température et de pression). Si la pression est relativement élevée, les faibles consommations sont difficilement contrôlables. Un exemple simple permet de s'en rendre compte : une consommation de 5 m³/h normaux à 20 bars donne, en première approximation, un débit brut de 0,250 m³/h, donc nettement inférieure à la valeur minimale indiquée ci-dessus. Dans ces conditions, le comptage est imprécis ou inexistant, ce qui est gênant lorsque le gaz considéré est coûteux, par exemple de l'hydrogène.

Un seul type de matériel est actuellement capable de contrôler des débits inférieurs au mètre cube par heure brut ; il s'agit du compteur à soufflets dit « à membranes ». Mais son emploi en pression pose des problèmes tels que les constructeurs en ont abandonné la réalisation complète, laissant au client le soin de réaliser l'enceinte de pression dans laquelle sera monté le compteur. Ces compteurs descendent jusqu'à 0,1 m³/h brut, mais leur utilisation en pression est aléatoire et ils ne permettent pas une automatisation simple du calcul du débit corrigé, c'est-à-dire ramené aux conditions standards (ou normales) de température et de pression.

L'invention a pour but de pallier les inconvénients ci-dessus et se propose de réaliser un dispositif de mesure du débit d'un fluide capable non seulement de contrôler des faibles débits, mais ayant de plus l'avantage de pouvoir être utilisé dans une très large gamme de pressions à partir de la pression atmosphérique, et dans une grande gamme de débits.

A cet effet, l'invention a pour objet un dispositif du type précité, caractérisé en ce que la roue comporte deux flasques latéraux, les aubages, les flasques et le carter définissant, à un jeu près entre les flasques et le carter destiné à permettre la rotation de la roue, une série de compartiments communiquant par ledit jeu avec les deux chambres latérales du carter, et en ce que le diamètre d'excentrement de la roue part d'un point, où le jeu radial entre l'extrémité de chaque aubage et la paroi périphérique de ladite chambre médiane est minimal, situé juste en amont de l'ajutage d'amenée, en considérant le sens de rotation de la roue.

Avec cet agencement, les aubes et les flasques latéraux de la roue emprisonnent des volumes successifs de fluide, à la manière d'une succession de pistons se déplaçant dans un cylindre, quel que soit le profil des vitesses dans les chambres latérales du carter, et le dispositif présente la caractéristique volumétrique indispensable à la mesure des faibles débits, contrairement aux compteurs de vitesse tels que le dispositif du brevet BE 433 573, qui est du type indiqué au début du présent mémoire mais qui ne permet absolument pas de mesurer les faibles débits car une partie importante du fluide s'écoule à côté de la roue.

Par ailleurs, si le dispositif est combiné à un dispositif de détection de vitesse de rotation de la roue du type à fibres optiques, le couple de détection de vitesse est totalement annulé, ce qui conduit à une sensibilité maximale.

L'état de la technique comporte par ailleurs des documents tels que DE-C-806 735 et DE-C-1076, montrant des compteurs qui comprennent des roues à flasques non excentrées.

Un exemple de réalisation de l'invention va maintenant être décrit en regard des dessins annexés, sur lesquels :

la figure 1 montre, de façon schématique, un dispositif voisin de l'invention et permettant de mieux comprendre celle-ci, le carter étant supposé ouvert ;

la figure 2 est une vue en coupe axiale prise suivant la ligne II-II de la figure 1 ;

la figure 3 montre en coupe longitudinale un dispositif selon l'invention ;

les figures 4 à 7 sont des vues prises en coupe suivant les lignes IV-IV à VII-VII de la figure 3, respectivement ; et

la figure 8 est une vue prise en coupe suivant la ligne VIII-VIII de la figure 6.

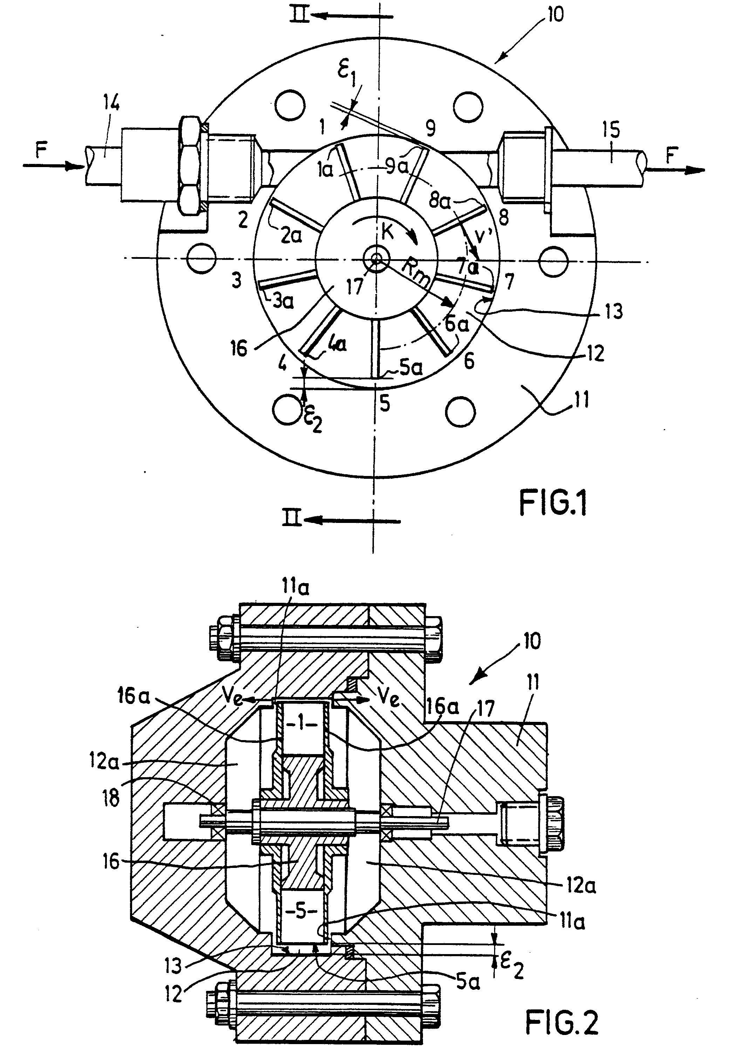

Le dispositif de mesure de débit représenté aux figures 1 et 2, désigné d'une façon générale par 10, comporte un carter étanche 11 en deux parties, par exemple métalliques, muni intérieurement d'une chambre médiane cylindrique 12, de section droite circulaire, dont la paroi périphérique est désignée par 13 et les parois latérales par 11a et qui est flanquée de chaque côté par une chambre latérale 12a. Dans cette chambre 12 débouchent deux ajutages 14 et 15 pour l'amenée et l'évacuation respectivement d'un fluide dont le débit doit être mesuré, ledit fluide circulant selon les flèches F. La chambre 12 est réalisée par contre-alésage de l'une des deux chambres latérales (12a).

Dans la chambre 12, une roue ou rotor 16, monté librement rotatif autour d'un axe 17 et supporté par des paliers à roulement 18, est muni d'aubages ou pales radiaux, angulairement équidistants 1, 2, 3 ... 9, de forme rectangulaire. Cette roue, munie de ses aubages, a un rayon moyen Rm, mesuré entre l'axe 17 et le centre des aubages 1 à 9. Le nombre et la disposition des aubages sont tels que le fluide issu de l'ajutage 14 rencontre toujours un aubage, quelle que soit la position angulaire de la roue.

Les deux ajutages 14 et 15 sont disposés coaxialement l'un par rapport à l'autre, et leur axe commun est tangent à la circonférence moyenne de rayon Rm de la roue 16. Les sections droites de ces ajutages sont identiques, mais sont inférieures ou égales à la surface Sp d'une pale 1, 2, 3 ... 9 de la roue.

La circulation du fluide dans le sens des flèches F entraîne, par action sur les aubages, la rotation de la roue 16 dans le sens de la flèche K. Le fluide remplit les chambres 12 et 12a, de sorte que la roue 16 tourne entièrement baignée dans ledit fluide, mais des flasques latéraux 16a de la roue 16 situés de part et d'autre des pales, perpendiculaires à l'axe 17 et de même diamètre extérieur que les pales, permettent de canaliser la veine de fluide issue de l'ajutage 14. La région périphérique des flasques 16a se trouve en regard des épaulements 11a du carter 11 perpendiculaires à l'axe 17, qui délimitent latéralement la chambre 12, la roue pénétrant entre ces deux épaulements.

Pour que la rotation soit possible, il faut un certain jeu entre tout ce qui tourne et tout ce qui est fixe. Ce jeu détermine nécessairement un débit de fuite, créant des écarts de pression. C'est pourquoi un jeu axial, juste nécessaire pour permettre la rotation de la roue et constant sur la périphérie, est prévu entre chaque flasque 16a et l'épaulement 11a adjacent.

Les extrémités 1a et 9a des pales 1 et 9 qui, dans la position représentée de la roue, sont situées entre les deux ajutages 14 et 15, se trouvent à une distance radiale minimale ε1 de la paroi interne 13 du carter qui est suffisante pour permettre l'évacuation de la presque totalité des fuites. Cette distance ε1 correspond à une surface de fuite s.

En supposant la roue immobile, le débit de fuite circulant à travers la section s est générateur d'un écart de pression entre les faces de la pale 1 qui reçoit le courant de fluide issu de l'ajutage 14. Ceci se traduit par un effort tendant à entraîner la pale dans le sens de la flèche K. La roue 16 se met donc en rotation, pour autant que le couple moteur ainsi créé est supérieur au couple résistant.

Ces conditions déterminent la valeur du débit de démarrage Qo. Pour un fluide donné, cette valeur sera d'autant plus faible que tous les efforts résistants s'exerçant sur les paliers ou la roue seront réduits.

Lorsque la roue est mise en rotation, le couple moteur résulte de l'effet de deux forces appliquées sur l'aubage 1. L'une de ces forces dépend toujours de la pression différentielle générée par le débit de fuite, l'autre est fonction de la variation de quantité de mouvement du volume de fluide entraîné par la roue. Ce volume est celui du compartiment délimité par deux aubages, la paroi 13 du carter et les deux flasques latéraux 16a.

Les fuites ont une vitesse plus faible qu'au démarrage, puisque la vitesse périphérique de la roue n'est plus nulle. L'influence du débit de fuite est alors du second ordre.

Au couple résistant dû aux forces mécaniques de frottement, qui sont limitées au frottement propre des paliers 18, s'ajoutent celui créé par le dispositif de détection de la rotation d'une part, et celui engendré par les forces de viscosité d'autre part.

Le couple de détection de vitesse est totalement annulé lorsque l'on utilise un dispositif de détection à fibres optiques, non représenté, de tout type approprié.

Le couple de viscosité est fortement réduit par le choix judicieux des jeux entre le carter 11 et le rotor 16. C'est pourquoi l'extrémité 5a de la pale 5 qui est à l'opposé des pales 1 et 9 se trouve à une distance radiale ε2 de la paroi interne 13 du carter nettement supérieure à la distance ε1 précitée. Cette différence de jeu entre les extrémités des pales et la paroi du carter peut être obtenue par exemple par un léger excentrement du contre-alésage constituant la chambre 12 par rapport aux chambres latérales 12a et à la roue 16.

Le débitmètre tel que décrit ci-dessus permet ainsi de mesurer des faibles débits de fluides, quelle que soit leur pression. De nombreuses modifications peuvent être apportées au dispositif des figures 1 et 2. En particulier, le nombre des aubages peut être supérieur ou inférieur à neuf, pourvu que deux aubages successifs puissent se placer simultanément entre les deux ajutages 14 et 15. De plus, on pourrait également utiliser, au lieu de paliers à roulement pour le rotor, toute autre sorte de paliers, y compris des paliers fluides. Le dispositif selon l'invention vise à améliorer les performances de celui décrit ci-dessus.

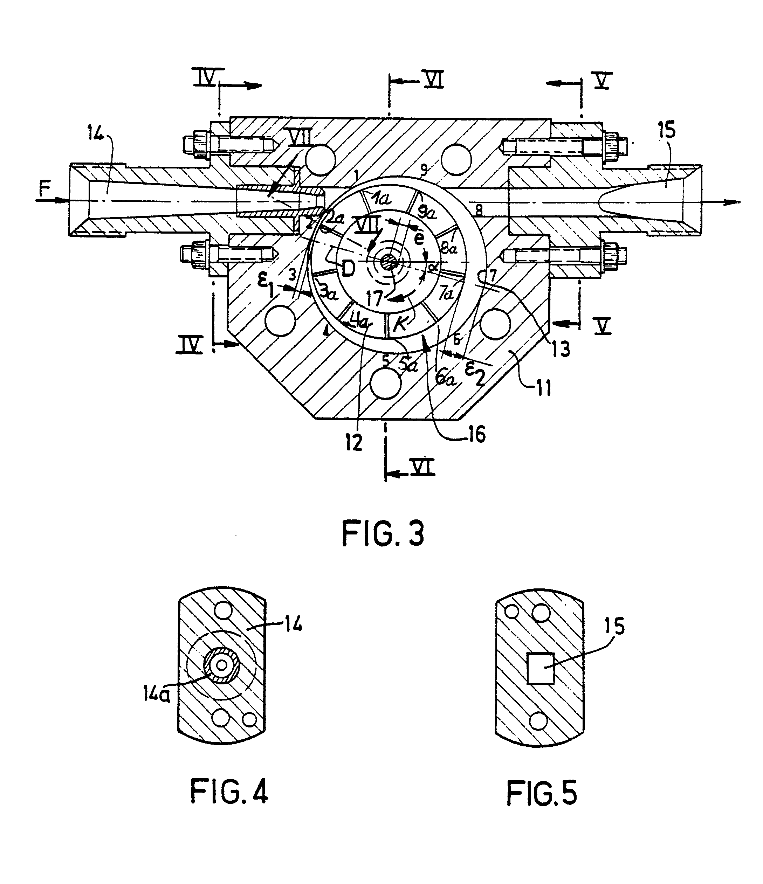

Le mode de réalisation du dispositif conforme à l'invention est illustré par les figures 3 à 8 et présente dans l'ensemble la même structure que celui des figures 1 et 2, et les éléments correspondants sont désignés par les mêmes références. Les différences sont les suivantes :

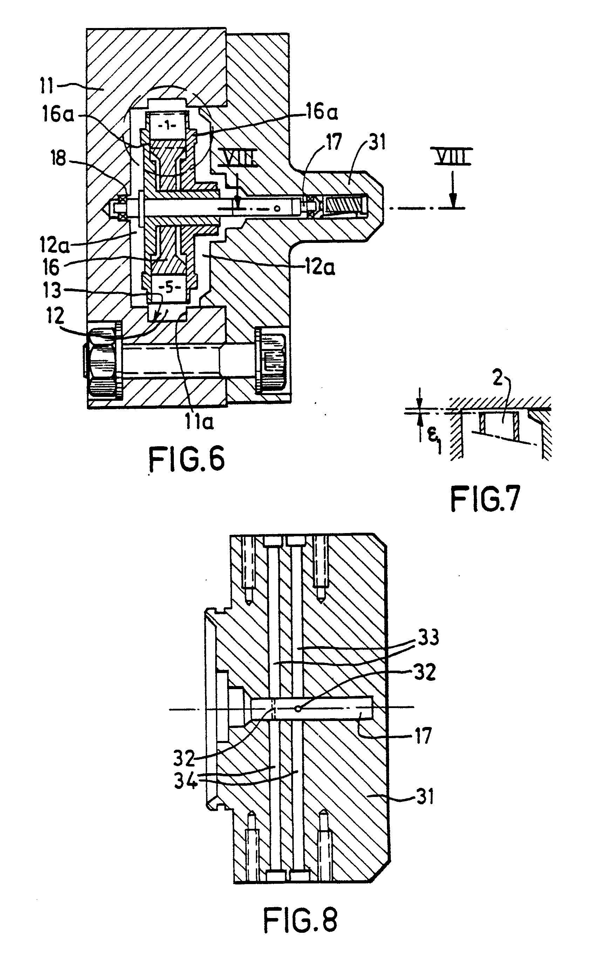

— la chambre 12 est plus étroite, de sorte que les épaulements 11a se trouvent au droit des flasques 16a, avec un jeu radial minimal et constant ε1 sur tout le pourtour. En fait, il est seulement nécessaire que ce jeu soit minimal dans la région de l'ajutage 14. La profondeur radiale du contre-alésage est nulle au point où le jeu entre les aubes et la paroi 13 est minimal, et donc égal à ε1 (figure 7), et cette profondeur croît progressivement jusqu'au point où le jeu entre ces aubes et cette paroi est maximal et égal à ε2 ;

— l'excentration e = ε1 — ε2 ainsi définie est effectuée suivant un diamètre D incliné qui aboutit juste en amont (en considérant le sens de rotation K) du débouché de l'ajutage d'entrée 14. Ce diamètre D forme un angle aigu α avec l'horizontale, comme on le voit à la figure 3 ;

— l'ajutage 14 est équipé d'un injecteur rapporté 14a qui en diminue la section utile. Ceci permet d'augmenter la vitesse de la roue pour un débit donné et a pour conséquence d'aboutir rapidement à un écoulement turbulent des fuites après le démarrage, ce qui est très favorable. Comme on le voit aux figures 4 et 5, l'injecteur 14a a une section de sortie circulaire d'aire inférieure à la section d'entrée de l'ajutage 15, qui est rectangulaire. L'aire de cette dernière est égale à celle des pales 1 à 9.

On a représenté schématiquement aux figures 6 et 8 le dispositif de détection à fibres optiques, qui convient également pour le dispositif des figures 1 et 2 : le prolongement de l'arbre de la roue tourillonne dans un appendice 31 du carter 11 et est percé de deux canaux 32 perpendiculaires l'un à l'autre. Deux voies émettrices de lumière et deux voies réceptrices à fibres optiques (non représentées) sont insérées dans des canaux radiaux 33, 34 en regard deux à deux et sont périodiquement mises en communication par les canaux 32 quand la roue tourne. Les signaux lumineux reçus par les voies réceptrices sont analysés par un dispositif électronique approprié (non représenté), qui fournit ainsi une indication de la vitesse de la roue.

On a constaté que, de façon surprenante, la caractéristique débit/vitesse du dispositif des figures 3 à 8 est pratiquement linéaire dès le débit de démarrage, de sorte que le détecteur à fibres optiques fournit directement une indication du débit de gaz. Ceci n'est pas le cas avec le dispositif des figures 1 et 2, qui nécessite le recours à un générateur de fonction.

Le dispositif des figures 3 à 8 permet par exemple de mesurer des débits réels d'hydrogène inférieurs à 500 l/h sous 100 bars.

## Revendications

1. Dispositif de mesure du débit d'un fluide, du type comprenant un carter étanche (11) qui définit d'une part une chambre médiane (12) dans laquelle une roue (16) à aubages radiaux équidistants (1 à 9) est montée librement rotative autour de son axe (17), en position excentrée par rapport à cette chambre (12), et d'autre part deux chambres latérales (12a) situées de part et d'autre de la roue (16), ledit carter (11) étant muni d'un ajutage (14) d'amenée et d'un ajutage (15) d'évacuation de fluide, lesdits ajutages (14, 15) étant alignés et disposés tangentiellement à la roue (16) de façon que le flux de fluide issu de l'ajutage d'amenée (14) rencontre les aubages (1 à 9) perpendiculairement audit axe de rotation (17), caractérisé en ce que la roue (16) comporte deux flasques latéraux (16a), les aubages (1 à 9), les flasques (16a) et le carter (11) définissant, à un jeu près entre les flasques (16a) et le carter (11) destiné à permettre la rotation de la roue (16), une série de compartiments communiquant par ledit jeu avec les deux chambres latérales (12a) du carter, et en ce que le diamètre d'excentrement (D) de la roue (16) part d'un point où le jeu radial ($\varepsilon_1$) entre l'extrémité (1a à 9a) de chaque aubage (1 à 9) et la paroi périphérique (13) de ladite chambre médiane (12) est minimal, ce point étant situé juste en amont de l'ajutage d'amenée (14), en considérant le sens de rotation (K) de la roue.

2. Dispositif suivant la revendication 1, caractérisé en ce que l'aire de l'ajutage d'évacuation (15) est égale à celle des pales (1 à 9) de la roue (16).

3. Dispositif suivant la revendication 2, caractérisé en ce que la section de l'ajutage d'évacuation (15) a la même forme géométrique que les pales (1 à 9) de la roue (16).

4. Dispositif suivant l'une des revendications 2 et 3, caractérisé en ce que la section droite de sortie de l'ajutage d'amenée (14) est inférieure à celle de l'ajutage d'évacuation (15).

5. Dispositif suivant l'une quelconque des revendications 1 à 4, caractérisé en ce que la périphérie des flasques (16a) de la roue (16) se trouve en regard de deux épaulements radiaux respectifs (11a) du carter (11) qui délimitent la chambre médiane (12).

6. Dispositif suivant la revendication 5, caractérisé en ce que le jeu entre chaque flasque (16a) et l'épaulement (11a) associé est constant sur toute la périphérie.

7. Dispositif selon l'une quelconque des revendications 1 à 6, caractérisé en qu'il comporte un dispositif (32, 33) de détection de vitesse de rotation de la roue (16) du type à fibres optiques.

## Claims

1. Flow measuring device for a fluid, of the type comprising a sealed housing (11) which defines on the one hand a middle chamber (12) in which a wheel (16) with radial equally spaced vanes (1 to 9) is mounted freely rotative about its axis (17) in an excentric position in relation to this chamber (12), and on the other hand two lateral chambers (12a) arranged on both sides of the wheel (16), said housing (11) being provided with an inlet nozzle (14) and an outlet nozzle (15) for fluid, the nozzles (14, 15) being aligned and disposed tangentially to the wheel (16) so that the stream of fluid coming from the inlet nozzle (14) strikes the vanes (1 to 9) perpendicularly to the axis of rotation (17), characterized in that the wheel (16) comprises two lateral flanges (16a), the vanes (1 to 9), the flanges (16a) and the housing (11) defining with a small clearance between the flanges (16a) and the housing (11) intended to permit a rotation of the wheel (16), a series of compartments communicating by said clearance with the two lateral chambers (12a) of the housing, and that the offsetting diameter (D) of the wheel (16) starts from a point where the radial clearance ($\varepsilon_1$) between the extremity (1a to 9a)

of each vane (1 to 9) and the peripheric wall (13) of said middle chamber (12) is minimal, this point being arranged just upstream of the inlet nozzle (14), considered in the direction of rotation (K) of the wheel.

2. Device according to claim 1, characterized in that the cross-sectional area of the outlet nozzle (15) is equal to that of the blades (1 to 9) of the wheel (16).

3. Device according to claim 2, characterized in that the section of the outlet nozzle (15) has the same geometric form as the blades (1 to 9) of the wheel (16).

4. Device according to one of the claims 2 and 3, characterized in that the cross-section of the exit of the inlet nozzle (14) is smaller than that of the outlet nozzle (15).

5. Device according to any one of the claims 1 to 4, characterized in that the periphery of the flanges (16a) of the wheel (16) is located opposite two respective radial shoulders (11a) of the housing (11) which define the middle chamber (12).

6. Device according to claim 5, characterized in that the clearance between each flange (16a) and the associated shoulder (11a) is constant through the whole periphery.

7. Device according to any one of the claims 1 to 6, characterized in that it comprises a device (32, 33) for detection of the rotational velocity of the wheel (16) of the optic fiber type.

**Patentansprüche**

1. Vorrichtung zur Messung des Durchflusses eines Fließmittels, mit einem geschlossenen Gehäuse (11), das einerseits eine Mittelkammer (12), in welcher ein Rad (16) mit radialen, gleich voneinander beabstandeten Schaufeln (1-9) um seine Achse (17) frei drehbar in einer außermittigen Stellung in Bezug auf diese Kammer (12) montiert ist, und andererseits zwei Seitenkammern (12a), die beiderseits des Rades (16) angeordnet sind, definiert, wobei das Gehäuse (11) mit einem Zulaufstutzen (14) und einem Entleerungsstutzen (15) für Fließmittel versehen ist und wobei die Stutzen (14, 15) miteinander fluchten und tangential zu dem Rad (16) derart angeordnet sind, daß der von dem Zulaufstutzen (14) kommende Fließmittelfluß auf die Schaufeln (1-9) senkrecht zu der Rotationsachse (17) auftrifft, dadurch gekennzeichnet, daß das Rad (16) zwei seitliche Flansche (16a) aufweist, wobei die Schaufeln (1-9), die Flansche (16a) und das Gehäuse (11) mit einem geringen Spielraum zwischen den Flanschen (16a) und dem Gehäuse (11), der dazu bestimmt ist, die Rotation des Rades (16) zu gestatten, eine Reihe von Abteilen definieren, die durch den Spielraum mit den beiden seitlichen Kammern (12a) des Gehäuses in Verbindung stehen, und daß der Exzentrierungsdurchmesser (D) des Rades (16) von einem Punkt ausgeht, wo der radiale Spielraum ($\varepsilon_1$) zwischen dem äußeren Ende (1a bis 9a) jeder Schaufel (1-9) und der Umfangswand (13) der Mittelkammer (12) am kleinsten ist, wobei dieser Punkt genau aufstromwärts von dem Zulaufstutzen (14), im Sinne der Drehung (K) des Rades betrachtet, angeordnet ist.

2. Vorrichtung nach Anspruch 1, dadurch gekennzeichnet, daß der Flächeninhalt des Entnahmestutzens (15) gleich demjenigen der Blätter (1 bis 9) des Rades (16) ist.

3. Vorrichtung nach Anspruch 2, dadurch gekennzeichnet, daß der Schnitt des Entleerungsstutzens (15) die gleiche geometrische Form wie die Blätter (1 bis 9) des Rades (16) hat.

4. Vorrichtung nach einem der Ansprüche 2 und 3, dadurch gekennzeichnet, daß der Auslaßquerschnitt des Zulaufstutzens (14) kleiner als derjenige des Entleerungsstutzens (15) ist.

5. Vorrichtung nach einem der Ansprüche 1 bis 4, dadurch gekennzeichnet, daß der Umfang der Flansche (16a) des Rades (16) sich gegenüber jeweils zwei radialen Absätzen (11a) des Gehäuses (11) befindet, die die Mittelkammer (12) begrenzen.

6. Vorrichtung nach Anspruch 5, dadurch gekennzeichnet, daß der Spielraum zwischen jedem Flansch (16a) und dem damit verbundenen Absatz (11a) über den gesamten Umfang konstant ist.

7. Vorrichtung nach einem der Ansprüche 1 bis 6, dadurch gekennzeichnet, daß sie eine Einrichtung (32, 33) zur Feststellung der Drehgeschwindigkeit des Rades (16) vom Typ optischer Fasern aufweist.

FIG.1

FIG.2

FIG. 3

FIG. 4

FIG. 5

2

FIG.6

FIG.7

FIG.8